# EUROPEAN PATENT APPLICATION

(11) **EP 4 830 812 A1**
(43) Date of publication of application: **28.10.2026**
(21) Application number: 25171806.0
(22) Date of filing: 22.04.2025
(51) Int. Cl.: B01D 53/02, B01D 53/32, B01J 20/00, F24F 8/192, B01D 53/26

(54) **AIR PURIFICATION DEVICE AND MANUFACTURING METHOD OF MOISTURE-ABSORBING CONDUCTOR THEREOF**

(60) Divisional application: 26194088.6
(71) Applicant: Golden Land Technology Co., Ltd., 333 Taoyuan City (TW); Tseng, Wei-Lin, Taipei City 115 (TW)
(72) Inventor: LO, Wen-Chien, 333 Taoyuan City (TW); KAO, Ming-Chieh, 333 Taoyuan City (TW); CHEN, Chih-Chung, 333 Taoyuan City (TW); LIN, Ping-Tsan, 333 Taoyuan City (TW); TSENG, Wei-Lin, 333 Taoyuan City (TW)
(74) Representative: 2K Patent Partnerschaft mbB

(57) **Abstract**

This disclosure is directed to an air purification device having a negative electrode (110) and multiple moisture-absorbing conductors (200). The moisture-absorbing conductors (200) are arranged on the negative electrode (110), and the moisture-absorbing conductor (200) has a ceramic fiber (210), and the ceramic fiber (210) is wrapped with a graphene coating (200). Water contained in the ceramic fiber (210) may be separated into numerous small areas and therefore easy to be discharged. Water may be discharged through the graphene coating (220) at any position on the ceramic fiber (210).

## Description

### BACKGROUND OF THE DISCLOSURE

### Technical Field

This disclosure is directed to an air purification device, in particular to a discharge air purification device and manufacturing method of a moisture-absorbing conductor thereof.

### Description of Related Art

Electrostatic atomization is a technology of dispersing water via an electric field. A pair of electrodes are spaced from each other and applied with a high voltage to generate an electric field between the two electrodes. When a small amount of water is placed at the cathode in the electric field, the water molecules are decomposed into hydroxyl radicals (so called hydroxyl radicals, with a chemical formula of ^{·}OH). Hydroxyl radicals are strong oxidants having an unpaired valence electron and therefore charged, which may destroy microorganisms and decompose toxic chemicals in the air and may drive suspended particles in the air to agglomerate and fall.

An electrostatic atomization device of prior art has a copper pin cathode. Water is not able to be contained in the copper pin cathode, so that atomized water should be sprayed on the cathode and a small amount of water at the pin may be decomposed into hydroxyl radicals. However, in fact, the arrangement mentioned above leads to condensed water on the surface of the cathode, and redundant condensed water accumulated on the cathode leads to unstable discharge at the tip of the cathode. Common water-absorbent materials are not conductive. Therefore, these water-absorbent materials may be used for containing water but may not improve discharge efficiency.

In views of this, in order to solve the above disadvantage, the inventor studied related technology and provided a reasonable and effective solution in this disclosure.

### SUMMARY OF THE INVENTION

This disclosure is directed to a discharge air purification device and a manufacturing method of a moisture-absorbing conductor thereof.

This disclosure is directed to an air purification device having a cathode and a plurality of moisture-absorbing conductors. The moisture-absorbing conductors are arranged in the cathode, the moisture-absorbing conductor has a ceramic fiber, and the ceramic fiber is wrapped with a graphene coating.

In one embodiment of this disclosure, the cathode has a copper body and a nickel coating wrapping the copper body.

In one embodiment of this disclosure, the copper body is an elongated plate.

In one embodiment of this disclosure, the graphene coating has a plurality of graphene flakes, an average radius of the graphene flakes is within 50 mesh to 80 mesh, the graphene flakes are stacked within 2 levels to 5 levels, and a thickness of the graphene coating is within 0.3 nm to 1 nm.

In one embodiment of this disclosure, the moisture-absorbing conductor is columnar.

In one embodiment of this disclosure, the moisture-absorbing conductor has one end of a tapered shape and another end fixed on the cathode.

In one embodiment of this disclosure, the ceramic fiber is made of at least one of zirconium oxide, aluminum oxide, and silicon carbide.

In one embodiment of this disclosure, the air purification device further has an anode which is spaced from the cathode.

In one embodiment of this disclosure, the air purification device further has a high-voltage module, the high-voltage module has an anode end and a cathode end, the anode end is connected to the anode, and the cathode end is connected to the cathode.

In one embodiment of this disclosure, the air purification device further has a blower, the blower is defined with a blowing direction across the cathode and through the moisture-absorbing conductors.

This disclosure is directed to a manufacturing method of a moisture-absorbing conductor of an air purification device which has steps of providing a mixed raw material mixed with at least ceramic fiber, graphene powder 5 wt%^{~}10 wt% and bonder; and drying the mixed raw material to solidify into a predetermined shape.

In one embodiment of this disclosure, further has a step of providing a mold and molding the mixed raw material by the mold before drying the mixed raw material.

In one embodiment of this disclosure, the mixed raw material has the ceramic fiber wrapped with the graphene powder.

In one embodiment of this disclosure, the ceramic fiber comprises a fiber made of at least one of silicon carbide, aluminum oxide, and zirconium oxide by sintering.

The moisture-absorbing conductors of the air purification device of this disclosure have ceramic fibers, and the surface of the ceramic fiber is coated with a graphene coating. The ceramic fiber has pores therein so as to form a porous structure, so that the moisture-absorbing conductor is good at absorbing water. Containing water in ceramic fiber may separate the water into numerous small areas so as to facilitate discharge, and the water may be discharged by the graphene coating at any position on the ceramic fiber.

### BRIEF DESCRIPTION OF THE DRAWINGS

FIG. 1 is a perspective view showing an air purification device according to one embodiment of this disclosure.
FIG. 2 is a perspective view showing a cathode and moisture-absorbing conductors of the air purification device according to one embodiment of this disclosure.
FIG. 3 is a perspective view showing a ceramic fiber of the moisture-absorbing conductor of the air purification device according to one embodiment of this disclosure.
FIG. 4 is a cross-sectional view of a portion of the ceramic fiber of the air purification device according to one embodiment of this disclosure.
FIG. 5 is a perspective view showing a cathode and moisture-absorbing conductors of the air purification device according to another embodiment of this disclosure.
FIG. 6 is a perspective view showing a cathode and moisture-absorbing conductors of the air purification device according to further another embodiment of this disclosure.
FIG. 7 is a flow chart of steps of a manufacturing method of the moisture-absorbing conductor according to one embodiment of this disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

It should be understood that the orientations or positional relationships in this disclosure which are indicated by the terms such as "front side", "rear side", "left side", "right side", "front end", "rear end", "end", "vertical", "horizontal", "vertical", "top" and "bottom" are based on the orientations or positional relationships as shown in the drawings. These are only used for describing this disclosure and simplifying the description rather than indicating or implying that the device or element have a specific orientation or be constructed and operated in a specific orientation, and it should not be considered as limitations of the scopes of this disclosure.

The terms used herein without additional definition such as "substantially" and "approximately" are used to describe and illustrate small changes. When used in an event or situation, the term may include the precise moment at which the event or situation occurs, and a close approximation to moment the event or situation occurs. For example, when combined with a numerical value, the term may include a range of variation less than or equal to ±10% of the numerical value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%.

Detailed descriptions and technical contents of this disclosure is described in the flowing paragraph with reference to the drawings. However, the drawings are attached only for illustration and are not intended to limit this disclosure.

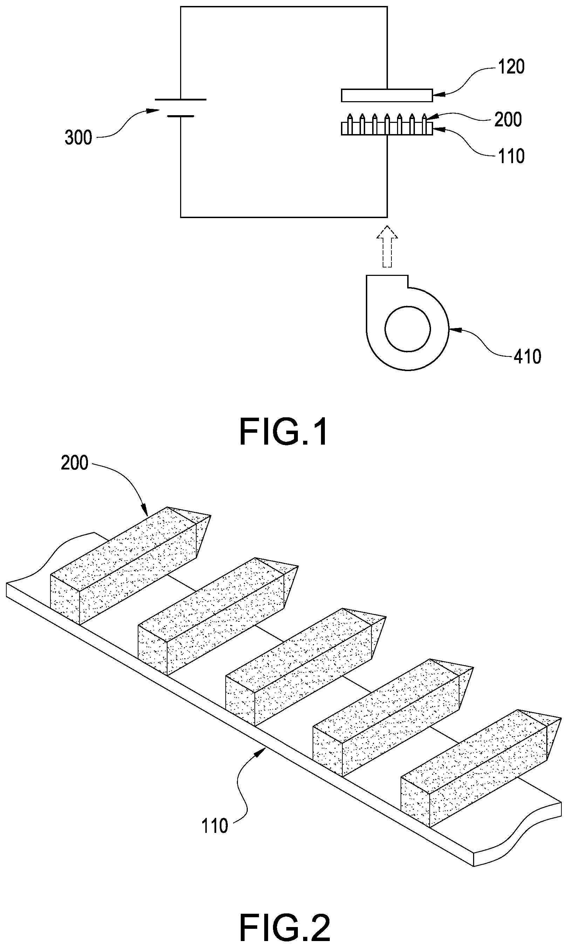

FIG. 1 is a perspective view showing an air purification device according to one embodiment of this disclosure. According to FIG. 1, one embodiment of this disclosure provides an air purification device which has at least a cathode 110 and a plurality of moisture-absorbing conductors 200, and the air purification device of this disclosure also has a high-voltage module 300 and an anode 120 as well. The high-voltage module 300 has a positive charge end and a negative charge end, the negative charge end is connected to the cathode 110, the positive charge end is connected to the anode 120. The anode 120 is an elongated plate corresponding to the cathode 110, and the anode 120 and the cathode 110 are disposed in parallel and spaced from each other. When the high-voltage module 300 is discharging, an electric field is established between the anode 120 and the cathode 110. The air purification device of this disclosure also has a blower 410, the blower 410 is defined with a blowing direction perpendicular to the cathode 110 to blow air flow through the moisture-absorbing conductors 200 and carry hydroxyl free radicals into the ambient air. Hydroxyl radicals are strong oxidants having an unpaired valence electron and therefore charged, which may destroy microorganisms and decompose toxic chemicals in the air and may drive suspended particles in the air (such as PM2.5 particles) to agglomerate (for example, to agglomerate into PM10 particles) and fall.

According to this embodiment, the cathode 110 has a copper body, the copper body is a plate, the copper body is wrapped with a nickel coating, and the nickel coating is made of Nickel (Trivalent Nickel). In this embodiment, the negative electrode cathode 110 is an elongated plate, but the scopes of this disclosure should not be limited to the embodiment.

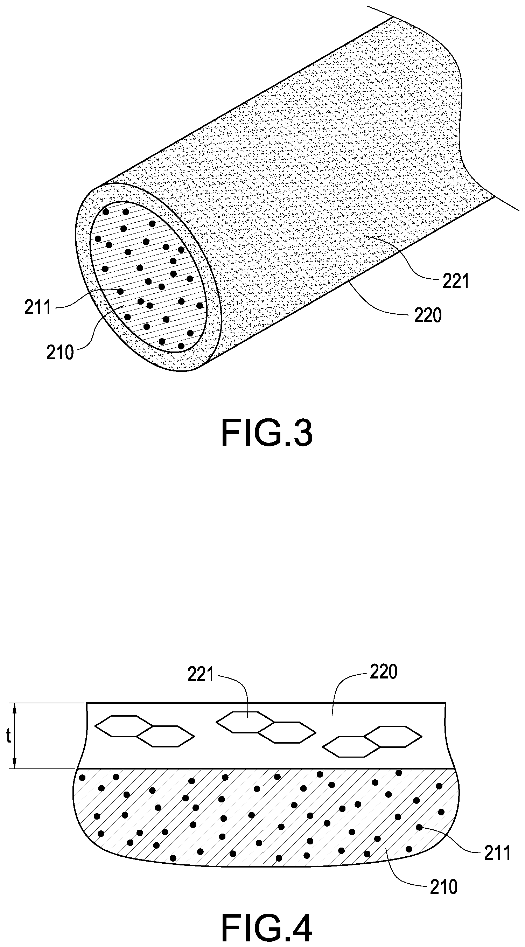

FIG. 2 is a perspective view showing a cathode and moisture-absorbing conductors of the air purification device according to one embodiment of this disclosure. According to FIG. 2, the moisture-absorbing conductors 200 are arranged on the cathode 110 and specifically arranged along the cathode 110 of an elongated plate shape. According to this embodiment, the moisture-absorbing conductor 200 is a column (pillar), and the column has a tapered end at one end thereof and another end connected to the cathode 110. FIG. 3 is a perspective view showing a ceramic fiber of the moisture-absorbing conductor of the air purification device according to one embodiment of this disclosure. According to FIG. 3, each of the moisture-absorbing conductors 200 has ceramic fibers 210, and the ceramic fiber 210 is wrapped with a graphene coating 220. Specifically, the ceramic fiber 210 may be made of materials selected from Zirconia oxide, aluminum oxide, silicon carbide or combinations thereof. The moisture-absorbing conductors 200 have ceramic fibers 210 having pores 211 therein so as to form a porous structure, so that the moisture-absorbing conductor 200 is good at absorbing water. Containing water in the ceramic fibers 210 may separate the water into numerous small areas so as to facilitate discharge, and the water may be discharged by the graphene coating 220 at any position on the ceramic fiber 210. Accordingly, more areas than the tip discharging of related art may be formed for discharging.

FIG. 4 is a cross-sectional view of a portion of the ceramic fiber of the air purification device according to one embodiment of this disclosure. According to FIG. 4, the graphene coating 220 has a plurality of graphene flakes 221, and the graphene flake 221 is specifically of a scale shape with a diameter (or a width) within 50 to 80 meshes. The graphene flakes 221 in the graphene coating 220 are disposed in a stack with 2 to 5 layers, the graphene coating 220 has a thickness within 0.3 nm to 1 nm. According to this disclosure, the graphene flakes 221 in the graphene coating 220 are disposed in a stack with 2 layers, and the graphene coating 220 has a thickness of 0.34 nm. The ceramic fiber 210 is wrapped with the graphene coating 220 providing good electrical conductivity.

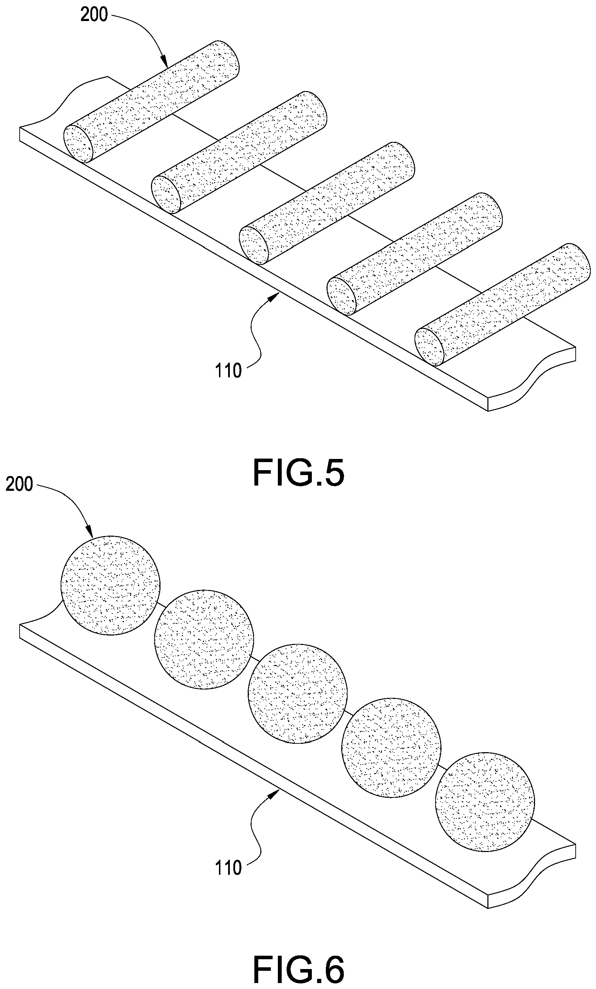

FIG. 5 is a perspective view showing a cathode and moisture-absorbing conductors of the air purification device according to another embodiment of this disclosure. FIG. 6 is a perspective view showing a cathode and moisture-absorbing conductors of the air purification device according to further another embodiment of this disclosure. However, the moisture-absorbing conductor 200 should not be limited to specific shapes. For example, the moisture-absorbing conductor 200 may also be a cylinder as shown in FIG. 5 or a sphere as shown in FIG. 6.

The moisture-absorbing conductor 200 may absorb small amounts of moisture in the air. When the high-voltage module 300 is discharging, hydroxyl radicals (chemical formula: ^{·}OH, also known as hydroxyl radicals) may be excited from the moisture absorbed in the moisture-absorbing conductor 200 by the high-voltage negative voltage of the electric field. The hydroxyl radical mentioned above is different from the generally known hydroxy/hydroxyl (group) (with the chemical formula -OH). The generally known hydroxyl group is a functional group rather than the free radical mentioned above.

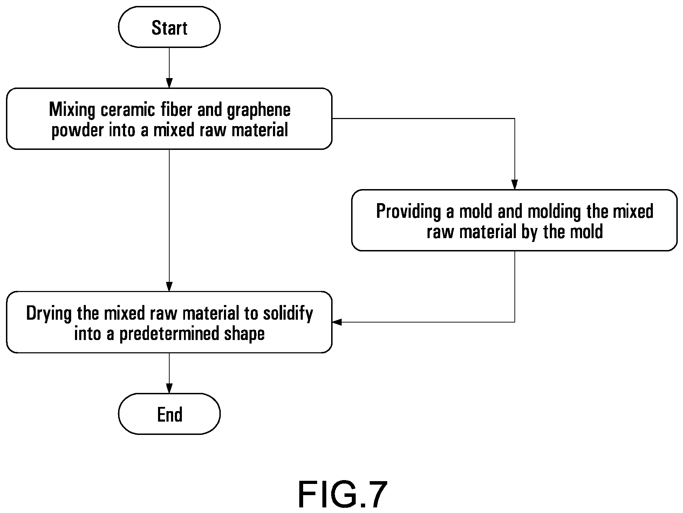

FIG. 7 is a flow chart of steps of a manufacturing method of the moisture-absorbing conductor according to one embodiment of this disclosure. According to FIG. 7, the manufacturing method of the moisture-absorbing conductor 200 has steps illustrated below.

The ceramic fiber 210 (generally a plurality) is added with a graphene powder (5 wt%~10 wt%) and a binder to form a mixed raw material. The graphene powder in the ceramic fiber is wrapped with the mixed raw material via a mixing process such as stirring or soaking, so that the ceramic fiber 210 may be a carrier of the graphene powder. The ceramic fiber 210 may be sintered fibers made of material(s) selected from silicon carbide, aluminum oxide, zirconium oxide or combinations thereof. Bothe of the ceramic fiber 210 and the graphene powder are able to withstand a high temperature.

The mixed raw material is molded and dried to form the moisture-absorbing conductors 200. The mixed raw materials may be air-dried naturally or dried with heat and dried to be solidified. The time and temperature for drying should not be limited to the embodiment.

According to this embodiment, a mold may be used for molding the mixed raw material. Generally, the mold has a molding cavity corresponding to a predetermined shape which is used for containing the mixed raw material for further molding. Therefore, the mold will not be further described in detail and will not be shown in the figures. The mold of this embodiment may mold without pressure. The moisture-absorbing conductor 200 may be molded into various shapes according to various operation requirements. For example, the moisture-absorbing conductor 200 may be molded to a pyramidal structure as shown in FIG. 2, a cylindrical structure as shown in FIG. 5, or a spherical structure as shown in FIG. 6.

## Claims

1. An air purification device, comprising:
a cathode (110); and
a plurality of moisture-absorbing conductors (200), arranged on the cathode (110), the moisture-absorbing conductors (200) comprising at least one ceramic fiber (210), and the ceramic fiber (210) wrapped with a graphene coating (220).

2. The air purification device according to claim 1, wherein the cathode (110) comprises a copper body and a nickel coating wrapping the copper body.

3. The air purification device according to claim 2, wherein the copper body is an elongated plate.

4. The air purification device according to claim 1, wherein the graphene coating (220) comprises a plurality of graphene flakes (221), an average radius of the graphene flakes (221) is between 50 mesh and 80 mesh, the graphene flakes (221) are stacked between 2 levels and 5 levels, and a thickness of the graphene coating (220) is between 0.3 nm and 1 nm.

5. The air purification device according to claim 1, wherein the moisture-absorbing conductor (200) is columnar.

6. The air purification device according to claim 5, wherein the moisture-absorbing conductor (200) comprises one end of a tapered shape and another end fixed on the cathode (110).

7. The air purification device according to claim 1, wherein the ceramic fiber (210) is made of at least one of zirconium oxide, aluminum oxide, and silicon carbide.

8. The air purification device according to claim 1, further comprising an anode (120) spaced from the cathode (110).

9. The air purification device according to claim 8, further comprising a high-voltage module (300), the high-voltage module (300) comprising an anode end and a cathode end, the anode end connected to the anode (120), and the cathode end connected to the cathode (110).

10. The air purification device according to claim 1, further comprising a blower (410), the blower (410) defined with a blowing direction across the cathode (110) and through the moisture-absorbing conductors (200).

11. A manufacturing method of a moisture-absorbing conductor (200) of an air purification device comprising:
providing a mixed raw material mixed with at least ceramic fiber (210), graphene powder 5 wt%~10 wt% and bonder; and
drying the mixed raw material to solidify into a predetermined shape.

12. The manufacturing method according to claim 11, further comprising: providing a mold and molding the mixed raw material by the mold before drying the mixed raw material.

13. The manufacturing method according to claim 11, further comprising: the mixed raw material comprising the ceramic fiber (210) wrapped with the graphene powder.

14. The manufacturing method according to claim 11, wherein the ceramic fiber (210) comprises a fiber made of at least one of silicon carbide, aluminum oxide, and zirconium oxide by sintering.
